# EUROPEAN PATENT APPLICATION

(11) **EP 2 924 963 A1**
(43) Date of publication of application: **30.09.2015**
(21) Application number: 13856195.6
(22) Date of filing: 29.07.2013
(51) Int. Cl.: H04M 1/725, G06F 9/46

(54) **METHOD FOR AUTOMATIC CLEANING BACKGROUND APPLICATION OF ELECTRONIC DEVICE, ELECTRONIC DEVICE AND STORAGE MEDIUM**

(30) Priority: 20.11.2012 CN 201210471453
(71) Applicant: Huizhou TCL Mobile Communication Co., Ltd., Huizhou, Guangdong 516006 (CN)
(72) Inventor: ZHOU, Xianyang, Huizhou Guangdong 516006 (CN)
(74) Representative: Petraz, Gilberto Luigi
(86) International application number: PCT/CN2013/080369
(87) International publication number: WO 2014/079228

(57) **Abstract**

A method for auto-cleaning up applications in a background of an electronic device system is provided, comprising the steps of: acquiring an occupancy rate of a CPU or a memory, and determining periodically whether the occupancy rate exceeds a preset threshold; querying all applications running in the background of the electronic device system, and identifying all non-system applications if the occupancy rate exceeds the preset threshold; and calling a common interface to close the non-system applications. An electronic device and a storage medium for auto-cleaning up applications in a background are also provided.

## Description

### BACKGROUND OF THE INVENTION

### 1. Field of the Invention

The present invention relates to a field of mobile terminals, and more specifically to a method, an electronic device, and a storage medium for auto-cleaning up applications in a background.

### 2. Description of the Prior Art

The functions of the current smart phones have become more and more powerful with the development of technology. Users may install or uninstall applications based on their requirements. Android systems and Symbian systems used in smart phones are all multitasking operating systems, and allow multiple applications to run at the same time. In practice, many applications on a smart phone are not closed completely after user's quit instructions, but continue running in the background, and still occupy CPU (Central Processing Unit) and memory resources. When there are too many applications running in the background, resources are consumed which may cause the system to run slowly, or even crash. Smart phones are used as mobile communication devices, and the CPU and memory resources are limited. If the resources occupied by the non-system applications in background are not released in time, the user's operations and usage will be affected, power consumption will be increased, and the lifetime of the battery will be shortened.

### SUMMARY OF THE INVENTION

The main technological problem to be solved is how to auto-clean up applications in a background of an electronic device. To overcome the above-mentioned disadvantages, an object of the present invention is to provide a method, an electronic device, and a storage medium for auto-cleaning up applications in a background.

To overcome the above-mentioned disadvantages, the technical schemes of the present invention are illustrated hereunder.

The method for auto-cleaning up applications in a background of an electronic device system, comprises the following steps of:
acquiring an occupancy rate of a CPU or a memory in the electronic device system, and determining periodically whether the occupancy rate of the CPU or the memory in the electronic device system exceeds a preset threshold;
querying all applications running in the background of the electronic device system, and identifying all non-system applications from all of the applications running in the background when it is determined that the occupancy rate exceeds the preset threshold;
calling a common interface for closing applications in the electronic device system to close the non-system applications according to program information of the non-system applications.

An electronic device, comprises:
one or more processors;
a memory; and
one or more programs stored in the memory, and configured for being executed by the one or more processors to provide a method for auto-cleaning up applications in a background, and the one or more programs being classified according to functions thereof and comprising:
   an occupancy rate determining unit for acquiring an occupancy rate of a CPU or a memory in an electronic device system, and determining periodically whether the occupancy rate of the CPU or the memory in the electronic device system exceeds a preset threshold;
   a program identifying unit for querying all applications running in the background of the electronic device system, and identifying all non-system applications from all of the applications running in the background when it is determined that the occupancy rate exceeds the preset threshold;
   an executing unit for calling a common interface for closing applications in the electronic device system to close the non-system applications according to program information of the non-system applications.

A storage medium, for storing executable instructions for a processor, and the processor providing a method for auto-cleaning up applications in a background of an electronic device system by executing the executable instructions, and the method comprises:
acquiring an occupancy rate of a CPU or a memory in the electronic device system, and determining periodically whether the occupancy rate of the CPU or the memory in the electronic device system exceeds a preset threshold;
querying all applications running in the background of the electronic device system, and identifying all non-system applications from all of the applications running in the background when it is determined that the occupancy rate exceeds the preset threshold;
calling a common interface for closing applications in the electronic device system to close the non-system applications according to the program information of the non-system applications.

The method, the electronic device, and the storage medium for auto-cleaning up applications in the background provided by the present invention are capable of detecting the occupancy rate of the CPU or the memory in the electronic device periodically; when the occupancy rate of the CPU or the memory exceeds the preset threshold, all of the applications running in the background are queried, and the non-system applications are identified to be quit, thereby not only closing the non-system applications automatically when the occupancy rate runs too high, but also speeding up the system and saving power consumption and network traffic, to provide users with better performance of electronic devices.

### BRIEF DESCRIPTION OF THE DRAWINGS

FIG. 1 is a schematic structural diagram showing a work environment of an electronic device according to the present invention;
FIG. 2 is a schematic structural diagram showing a preferred embodiment of the electronic device according to the present invention; and
FIG. 3 is a flow chart of a method for auto-cleaning up applications in the background of the electronic device according to the preferred embodiment of the present invention.

### DETAILED DESCRIPTION OF THE PREFERRED EMBODIMENTS

Please refer to the drawings, wherein the same component symbols represent the same components. The principle of the present invention is implemented in a suitable computing environment for illustrative purposes. The following description is based on the specific illustrated embodiment of the present invention, which should not be construed as limiting the present invention, unless otherwise specified.

In the following description, the specific embodiment of the invention will be described with reference to the steps or symbols which are performed by one or more computer, unless otherwise described. Therefore, it will be learned that the following steps and symbols, which performed by computer, is manipulated by the CPU that represented of processing a structured type of electronic signals. The manipulation converts the data or maintains the data in a position in the memory of the computer, which is to be reconfigured or otherwise known to a skilled person to change the way in which the computer is operated. The data structure of the maintained data is at a physical location in the memory, which has specific properties defined by the data format. However, based upon the principles of the invention described in the above text, as it does not represent as a limitation, a skilled person will be able to learn a variety of steps or operations that implemented in hardware.

As used herein, the terms "component", "module", "system", "interface", and so on are generally intended to refer to some computer-related entities: hardware, a combination of hardware and software, software, or the software in execution. For example, a component may be, but is not limited to, a process running on a processor, a processor, an object, an executable application, a thread of an execution, an application, and/or a computer. By illustration, both the application and the controller which running on the controller can be a component. One or more components may be in an executing process and/or thread, and located on one computer and/or distributed between two or more computers.

Furthermore, the claimed subject matter may be implemented using standard programming and/or engineering techniques to produce a software, a firmware, a hardware, or any combination thereof to control a computer to implement the disclosed a theme method, an apparatus or an article of manufacture. As used herein, the term "manufacture" is intended to encompass any of the computer-readable devices, carriers, or mediums accessed by a computer program. Of course, a skilled person will recognize that many modifications may be made to this configuration without departing from the scope of the claimed subject matter or spirit.

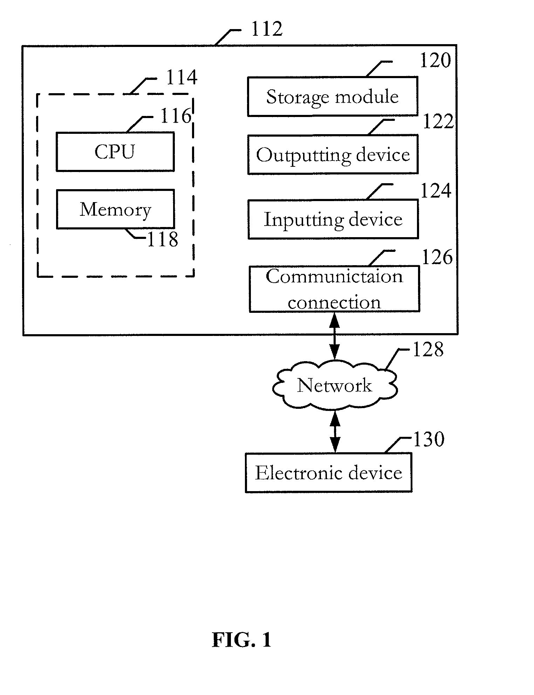

FIG. 1 and the ensuing discussion provide a work environment for a realization of the electronic device of the present invention with a brief and general description. The working environment in FIG. 1 is just one example of a suitable working environment, and is not intended to suggest any limitation on the scope of the work environment with use or functionality. An example of the electronic device 112 comprises, but is not limited to, a personal computer, a server computer, a hand-held or laptop device, a mobile device (such as mobile phone, personal digital assistant (PDA), media player, etc.), a multiprocessor system, a consumer electronic, a minicomputer, a mainframe computer, a distributed computing environment comprising any of the above systems or devices, and so on.

Although not required, the term "computer readable instructions" is described in a universal background executed by one or more electronic devices. Computer readable instructions may be distributed via a computer-readable medium (discussed below). The computer readable instructions may be implemented as program modules, such as that perform particular tasks or implement particular abstract data types of functions, objects, Application Programming Interface (API), data structures, etc. Typically, the above functions executed by the computer-readable instructions can be combined or distributed in various environments.

FIG. 1 illustrates an electronic device with one or more embodiment comprising a method for auto-cleaning up applications in the background of the electronic device according to the present invention. In one configuration, the electronic device 112 comprises at least one CPU 116 and a memory 118. According to the exact configuration and type of electronic device, the memory 118 may be a volatile memory (RAM), a nonvolatile memory (such as ROM, Flash Memory, etc.), or a combination of both. The configuration is shown by dotted lines 114 in FIG. 1.

In another embodiment, the electronic device 112 may comprise some additional characteristics or functions. For example, the electronic device 112 may comprise an additional storage device (such as a removable storage device and/or a local storage device), which comprises, but is not limited to, a magnetic storage device, an optical storage device, or the like. The additional storage device is shown by a storage module 120 in FIG. 1. In one embodiment, computer readable instructions for implementing one or more embodiment in this article may be stored in the storage module 120. The storage module 120 may store some other computer readable instructions for implementing an operation system, an application, and so on. The computer readable instructions may be uploaded in the memory 118, and be executed by the CPU 116.

The term "computer readable medium" used in this article comprises a computer storage medium. The computer storage medium comprises volatile, non-volatile, removed, and located medium, for storing information, such as computer readable instructions or other dates. The memory 118 and the storage module 120 are some examples of the computer storage medium. The computer storage medium comprises, but is not limited to, a RAM, a ROM, an EEPROM, a flash memory, or other storage device technology, a CD-ROM, a DVD or other optical storage device, a cassette tape, a tape, a disk or other storage device of magnetic storage devices, or any other medium which can be used for storing any information expected to be accessed by the electronic device 112. Any kinds of computer storage mediums may be a part of the electronic device 112.

The electronic device 112 may further comprise a communication connection 126, which permits the electronic device 110 to communicate with other devices. The communication connection 126 may comprise, but is not limited to, a cable modem, a network interface card (NIC), an integrated network interface, an RF transmitter/receiver, an Infrared port, a USB connected to or used to connect the electronic device 112 to other interfaces. The communication connection 126 may be a cable connection or a wireless connection. The communication connection 126 may transmit and/or receive communication medium.

The term "computer readable medium", may comprise communication medium. The communication medium typically comprises computer readable instructions or the other data, such as in a carrier wave or other transport mechanism with "modulated data signals", and delivery medium for delivering any information. The term "modulated data signal" may comprise a signal that one or more signal characters will be set or changed by the way that information is coded into the signals.

The electronic device 112 may comprise an inputting device 124, such as a keyboard, a mouse, a pen, a voice inputting device, a touch input device, an infrared camera, a video input device, and/or any other input devices. The electronic device 112 may comprise an outputting device 122, such as one or more monitor, speaker, printer, and/or any other outputting device. The inputting device 124 and the outputting device 122 may connect to another electronic device 112 via a cable connection, a wireless connection, or a combination of both. In one embodiment, the inputting device or the outputting device of another electronic device may be used as the inputting device 124 or outputting device 122 of the electronic device.

Components of the electronic device 112 may be connected through a variety of interconnections, such as bus connections. Such interconnects may include a Peripheral Component Interconnect (PCI) (e.g. Fast PCI), a Universal Serial Bus (USB), a FireWire (IEEE 1394), an optical bus structure, etc. In another embodiment, the components of the electronic device 112 may be connected by a network. For example, the memory 118 can be constituted by multiple physical memory units located in different physical locations and interconnected through the network.

A person skilled in a relevant field will realize that a storage device for storing computer readable instructions may be distributed across a network. For example, the electronic device 130, which is accessible via the network 128, may store computer readable instructions for implement the one or more embodiment in the present invention. The electronic device 112 may access the electronic device 130 and download a part of or the whole computer readable instructions for execution. Alternatively, the electronic device 112 can download a plurality of computer-readable instructions as required. It is also possible that some instructions are executed in the electronic device 112 and some instructions are executed in the electronic device 130.

The present invention provides many operations of the embodiment. In one embodiment, the one or more operations may constitute one or more computer-readable instructions stored in a computer-readable medium, which will enable the computing device to perform the operation after being executed by the electronic device. Part or all of the described operation sequence should not be construed to limit that these operations must be in sequence. A person skilled in the relevant field will appreciate that alternative sorts have the benefit of the present invention. Moreover, it should be understood that not all operations must be present in each embodiment provided herein.

Also, the word "preferred" used in this article means for instance, examples or illustrations. In this article, all the "preferred" in any aspect or design is not necessarily to be construed as advantageous over other aspects or designs. On the contrary, the term "preferred", is used to show the concept through the specification. As used in this article, the term "or" is intended to mean containing "or" not exclude "or". That is, unless otherwise specified or clear from the context, "X employs A or B" means an arrangement thereof. That is, if X employs A; X employs B, or X employs both A and B, then "X employs A or B" is met in any of the foregoing examples.

Although one or more embodiment was described in this article, a person skilled in the relevant filed may derive some equivalent variants and modifications based on reading and understanding the specification and drawings. This article should comprise all kinds of equivalent variants and modifications. Especially to the functions executed by the above components (such as elements or resources), it is described to execute the mentioned function. In addition, parts of character has been disposed, some other combination or variable changes based on it. Moreover, the terms "include", "with", or "have" or its variants, where used in a specification or claim, are designed to have a similar meaning to "comprise".

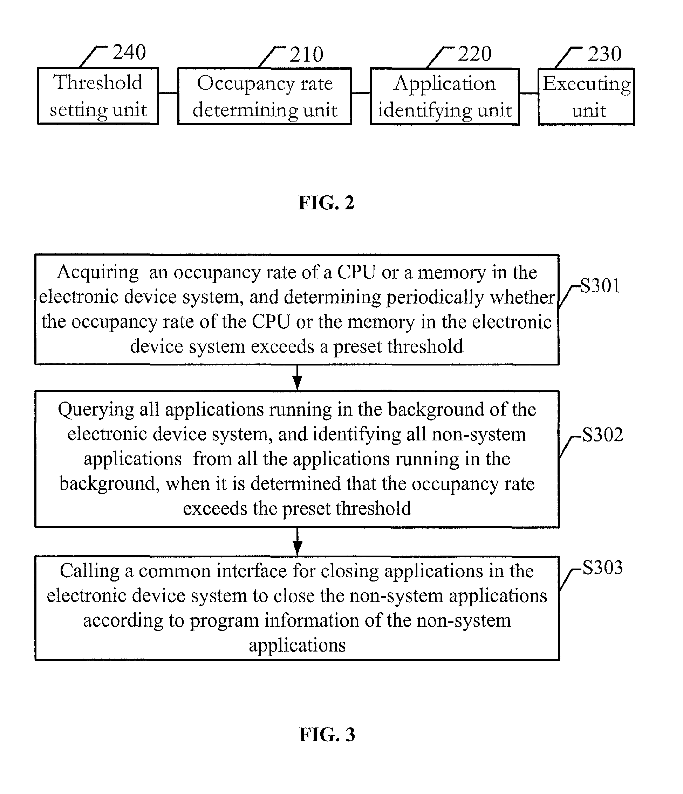

Please refer to FIG. 2, which is a schematic structural diagram showing a preferred embodiment of the electronic device according to the present invention. The electronic device comprises: one or more processors; a memory; and one or more programs stored in the memory, and configured for being executed by the one or more processors to provide a method for auto-cleaning up applications in a background, and the one or more programs being classified according to functions thereof and comprising an occupancy rate determining unit 210, a program identifying unit 220, and an executing unit 230.

The occupancy rate determining unit 210 is used for acquiring an occupancy rate of a central processing unit (CPU) or a memory in an electronic device system, and determining periodically whether the occupancy rate of the CPU or the memory in the electronic device system exceeds a preset threshold. Specifically, the occupancy rate determining unit acquires the occupancy rate of the CPU or the memory from an interface provided by the electronic device system.

The program identifying unit 220 is used for acquiring the attributes of the applications from an interface provided by the electronic device system when the occupancy rate of the CPU or the memory of the electronic device exceeds the preset threshold identifying all of the non-system applications from all of the applications according to the attributes of the applications, and sending program information of the non-system applications which are in execution to the executing unit 230. The non-system applications comprise all applications other than the system applications. Specifically, the program identifying unit 220 acquires the attributes of the applications through an interface provided by the electronic device system, and identifies whether the applications are non-system applications according to the attributes of the applications.

The executing unit 230 is used for calling a common interface for closing applications in the system to close the non-system applications according to the program information of the non-system applications.

The program information of the non-system applications comprises PIDs and the program names of the non-system applications.

Preferably, the electronic device further comprises a threshold setting unit 240 for receiving a user's operation instructions to set a threshold for the CPU or the memory. The threshold is used for controlling to auto-clean up applications in the background, when the current occupancy rate exceeds the threshold.

Preferably, the preset threshold of the occupancy rate of the CPU or the memory ranges from 70% to 85%.

The electronic device in the preferred embodiment comprises an occupancy rate determining unit 210, a program identifying unit 220, an executing unit 230, and a threshold setting unit 240. Before acquiring the occupancy rate of the CPU or the memory of the electronic device, the threshold setting unit 240 firstly sets the threshold of the CPU or the memory. When the occupancy rate determining unit 210 detects the occupancy rate of the CPU or the memory in the electronic device exceeds the threshold preset by the threshold setting unit 240, the program identifying unit 220 is used to identify the applications in the background to determine which ones are non-system applications, and the non-system applications are cleaned up and closed by the executing unit 230.

The work principle of the electronic device is similar or the some as the following method for auto-cleaning up applications in a background of an electronic device system, as described in the preferred embodiment. Please refer to the following detailed description of the method for auto-cleaning up applications in a background of an electronic device system.

The preferred embodiment provided the electronic device for auto-cleaning up applications in the background, periodically, not only auto-cleans up applications in a background, but also speeds up the system, and saves power consumption and network traffic, which provides users with better performance of the electronic devices.

Please refer to FIG. 2 and FIG. 3. FIG. 3 is a flow chart of a method for auto-cleaning up applications in the background of the electronic device according to the preferred embodiment of the present invention. The method for auto-cleaning up applications in the background of the electronic device in the preferred embodiment comprises following steps:

In step S301, an occupancy rate of the CPU or the memory in the electronic device system is acquired, and it is determined periodically whether the occupancy rate of the CPU or the memory in the electronic device exceeds the preset threshold.

In the above steps S301, the threshold is a percentage of the occupancy of the CPU or the memory. The threshold may be a customized value preset by the user via the threshold setting unit 240 according to the user's usage conditions of the electronic device, or a value preset by the system through the threshold setting unit 240. Specifically, the preferred threshold ranges from 70% to 85%. In one embodiment, if the electronic device has no any game applications installed, the threshold will be set to be 70%. If the user prefers to use the electronic device to browse webpages and play games, the threshold will be set to be 85%.

After presetting the threshold, the occupancy rate determining unit 210 will detect the occupancy rate of the CPU or the memory (that is, acquiring the occupancy rate of the CPU or the memory in the electronic device system). The specific occupancy rate of the CPU or the memory can be acquired by an interface provided by the electronic device system. For example, the current occupancy rate of the CPU or the memory can be obtained by an Android.os.System Properties interface function provided by the Android platform. The electronic device system periodically determines whether the occupancy rate of the CPU or the memory in the electronic device exceeds the preset threshold. Each period can be set as 10 minutes, or 5 minutes, depending on the preference of the user using the electronic device. After setting the threshold and acquiring the occupancy rate of the current system, step S302 is executed.

In step S302, all applications running in the background of the electronic device system are queried, and all non-system applications are identified from all of the applications running in the background, when the the occupancy rate is determined to exceed the preset threshold.

When the occupancy rate determining unit 210 determines the occupancy rate of the CPU or the memory of the current electronic device exceeds the preset threshold, the program identifying unit 220 queries all of the applications running in the background, and identifies all of the non-system applications. The non-system applications comprise all applications other than system applications. For example, when determined that the occupancy rate of the CPU in the electronic device is 90%, which exceeds the preset threshold value 70% (taking an example that the user's electronic device dosen't have any applications with large occupancy rates of the CPU or the memory, such as games, are installed), then the system queries all applications running in the background of the electronic device system, and identifies all non-system applications from all of the applications running in the background. The identifying method specifically comprises: the program identifying unit 220 checks the attribute of an application through an interface provided by the electronic device system platform and determines whether it is a system application. For example, the Android platform provides developers with ApplicationInfo class to obtain the attributes of the applications and determine whether an application is a system application. After finding out which applications running in the background are non-system applications, step S303 is executed.

In step S303, a common exit interface in the system is called to close the non-system applications according to the program information of the non-system applications.

The program information of the non-system applications comprises process identifiers (PIDs) and the program names of the non-system applications. When the application setup in the electronic device starts to run, the electronic device automatically assigns a process identifier PID for the application as a unique identification. The applications are able to be determined as system applications or non-system applications based on the PIDs and the program names, and are processed, respectively.

According to the program information of the non-system applications, the executing unit 230 calls the common interface for closing applications of the system to close the non-system applications corresponding to the attribute of the applications so as to clean up the applications in the background.

Preferably, before acquiring the occupancy rate of the CPU or the memory, the threshold setting module 240 receives user's operation instructions to preset the threshold of the occupancy rate of the CPU or the memory, in order to determine at what point the occupancy rate exceeds the preset threshold so as to begin auto-clean up of the applications in a background.

The preferred embodiment provides a method for auto-cleaning up applications in a background, comprises: the occupancy rate of the CPU or the memory in the electronic device system are acquired periodically; all applications running in the background of the electronic device system are queried, and all non-system applications are identified. When it is determined that the occupancy rate exceeds the preset threshold, the non-system applications are closed. The present invention not only auto-cleans up applications in a background, but also speeds up the system, saves power consumption and network traffic, and provides users with better performance of the electronic devices.

A person skilled in a relevant field should understand that part or full of the steps in the method can be done by a related hardware via computer instructions. The program may be stored in a computer readable storage medium. When the program executes, it may comprise the above process. Among them, the storage medium may be a disk, a CD, a Read - Only Memory (ROM) or a Random Access Memory (RAM), etc.

The present invention provides the method, the electronic device, and the storage medium for auto-cleaning up applications in a background, comprises the following point of: the occupancy rate of the CPU or the memory in the electronic device system are acquired periodically; all applications running in the background of the electronic device system are queried, and all non-system applications are identified. When it is determined that the occupancy rate exceeds the preset threshold, the non-system applications are closed. The present invention not only auto-cleans up applications in a background, but also speeds up the system, saves power consumption and network traffic, and provides users with better performance of the electronic devices.

It should be understood that the present invention has been described with reference to certain preferred and alternative embodiment which are intended to be exemplary only and do not limit the full scope of the present invention as set forth in the appended claims.

## Claims

1. A method for auto-cleaning up applications in a background of an electronic device system, comprising the following steps of:
acquiring an occupancy rate of a central processing unit (CPU) or a memory in the electronic device system, and determining periodically whether the occupancy rate of the CPU or the memory in the electronic device system exceeds a preset threshold;
querying all applications running in the background of the electronic device system, and identifying all non-system applications from all of the applications running in the background when it is determined that the occupancy rate exceeds the preset threshold; and
calling a common interface for closing applications in the electronic device system to close the non-system applications according to program information of the non-system applications.

2. The method as claimed in claim 1, wherein the occupancy rate of the CPU or the memory is acquired from an interface provided by the electronic device system.

3. The method as claimed in claim 2, wherein further comprising the following step of:
receiving user's operation instructions, and setting the preset threshold according to the user's operation instructions.

4. The method as claimed in claim 1, wherein the preset threshold ranges from 70% to 85%.

5. The method as claimed in claim 1, wherein the step of identifying all non-system applications from all of the applications comprises:
acquiring attributes of the applications from an interface provided by the electronic device system, and identifying whether the applications are non-system applications according to the attributes of the applications.

6. The method as claimed in claim 5, wherein the non-system applications comprise all applications other than system applications.

7. The method as claimed in claim 1, wherein the program information of the non-system applications comprises PIDs (Process Identification) and program names of the non-system applications.

8. An electronic device, comprising:
one or more processors;
a memory; and
one or more programs stored in the memory, and configured for being executed by the one or more processors to provide a method for auto-cleaning up applications in a background, and the one or more programs being classified according to functions thereof and comprising:
an occupancy rate determining unit for acquiring an occupancy rate of a central processing unit (CPU) or a memory in an electronic device system, and determining periodically whether the occupancy rate of the CPU or the memory in the electronic device system exceeds a preset threshold;
a program identifying unit for querying all applications running in the background of the electronic device system, and identifying all non-system applications from all of the applications running in the background when it is determined that the occupancy rate exceeds the preset threshold;
an executing unit for calling a common interface for closing applications in the electronic device system to close the non-system applications according to program information of the non-system applications.

9. The electronic device claimed in claim 8, wherein the occupancy rate determining unit acquires the occupancy rate of the CPU or the memory from an interface provided by the electronic device system.

10. The electronic device claimed in claim 8, wherein the electronic device further comprising:
a threshold setting unit, for receiving user's operation instructions, and setting the preset threshold according to the user's operation instructions.

11. The electronic device claimed in claim 8, wherein the preset threshold ranges from 70% to 85%.

12. The electronic device claimed in claim 8, wherein the program identifying unit acquires attributes of the applications from an interface provided by the electronic device system, and identifies all the non-system applications from all of the applications according to the attributes of the applications.

13. The electronic device claimed in claim 12, wherein the non-system applications comprise all applications others than the system applications.

14. The electronic device claimed in claim 8, wherein the program information of the non-system applications comprises PIDs (Process Identification) and program names of the non-system applications.

15. A storage medium for storing executable instructions for a processor, and the processor providing a method for auto-cleaning up applications in a background of an electronic device system by executing the executable instructions, and the method comprising:
acquiring an occupancy rate of a central processing unit (CPU) or a memory in the electronic device system, and determining periodically whether the occupancy rate of the CPU or the memory in the electronic device system exceeds a preset threshold;
querying all applications running in the background of the electronic device system, and identifying all non-system applications from all of the applications running in the background when it is determined that the occupancy rate exceeds the preset threshold; and
calling a common interface for closing applications in the electronic device system to close the non-system applications according to application information of the non-system applications.
